# EUROPEAN PATENT SPECIFICATION

(11) **EP 2 971 844 B1**
(45) Date of publication and mention of the grant of the patent: **02.12.2026**
(21) Application number: 14714549.4
(22) Date of filing: 13.03.2014
(51) Int. Cl.: F16F 1/48, B64C 27/39, F16F 9/14

(54) **ROTARY DAMPERS, SYSTEMS, AND RELATED METHODS**
ROTIERENDE DÄMPFER, SYSTEME DAMIT UND ZUGEHÖRIGE VERFAHREN
AMORTISSEURS ROTATIFS, SYSTÈMES ET PROCÉDÉS ASSOCIÉS

(30) Priority: 14.03.2013 US 201361781091 P
(43) Date of publication of application: 20.01.2016
(73) Proprietor: LORD Corporation, Cleveland OH 44124 (US)
(72) Inventor: MCGILL, Brian, Erie, Pennsylvania 16505 (US); PTAK, Keith R., Erie, Pennsylvania 16506 (US); CATANZARITE, David M., Edinboro, Pennsylvania 16412 (US)
(74) Representative: Murgitroyd & Company
(86) International application number: PCT/US2014/025307
(87) International publication number: WO 2014/151257

(56) References cited:
- EP-A1- 0 478 444
- FR-A1- 2 592 449
- US-A1- 2009 159 382
- US-B2- 8 167 561
- US-B2- 8 356 977

## Description

### TECHNICAL FIELD

The present subject matter relates generally to rotary dampers, systems, and related methods. More particularly the present subject matter relates to rotary dampers and systems adapted to damp lead and lag motions associated with rotary wing aircrafts, and related methods.

### BACKGROUND

During operation of certain aircraft, including helicopters that incorporate articulated rotor systems, phenomena such as ground resonance may occur. Ground resonance can jeopardize the safety and operation of the aircraft, and can cause destruction thereof. In general, such phenomena occurs when the aircraft is on the ground, as rotor blades or wings become shifted out of phase with respect to one another and an imbalance of the rotor system results. As the unbalanced rotor system begins to vibrate at the airframe's resonance frequency, any shock transmitted to the rotor system from contact with the ground can further increase the lead or lag of one or more of the blades, thereby causing the rotor system's center of gravity to be displaced from the center of rotation. These violent oscillations can lead to a catastrophic self-destruction of the helicopter within a matter of seconds.

Rotary damper systems have been developed to minimize this effect by damping the lead lag motion of articulated rotor blades. Damping such motion helps stabilize the rotor blades and prevent an irregular spacing between the blades that leads to oscillation induction. Conventional rotary dampers include hydraulic dampers having rotary bearing seals containing damping fluid used to damp system vibrations.

One problem associated with conventional rotary dampers is inadequate sealing of the damper liquid within the hydraulic chambers. In some instances, the use of bearings in traditional dampers has proven to produce unreliable sealing. Unreliable sealing leads to fluid loss, which creates the need for inspection and maintenance on a frequent and routine basis.

To solve this problem, traditional dampers have incorporated internal elastomer seals to contain the damper liquid, but continue to rely on bearings for overall damping functions. This is also problematic as using more parts per rotary damper has led to higher costs and more complicated designs to produce effective sealing and damping during operation.

A further problem associated with traditional rotary dampers is that during routine inspections, traditional dampers must be entirely removed from the rotary wing system in order to be inspected for sealing damage and replacement. Continued removal of the entire damper during its lifetime can decrease quality and/or lifetime of the parts associated with the damper as parts may become loosened or stripped during removal. In addition, as some features of the rotary damper are not visible from the exterior, some degradation may not be detected.

Accordingly, a need exists for rotary dampers and systems having a high reliability and long service life. A need exists for rotary dampers and systems that maximize the performance capabilities of high elastic stiffness and high damping with minimal variations over the operating temperature range of the helicopter. A need exists for rotary dampers and systems with installation characteristics allowing for efficient inspection of elastomer sections without the need for special inspection equipment or removal of the damper from the rotor assembly.

European Patent Publication No. EP0478444A1 discloses a rotor head for a rotary wing aircraft having a plurality of rotor blades, such that each blade is coupled to the hub by an attachment assembly. The attachment assembly includes a thrust bearing device attached to the hub for allowing angular oscillations, and drag damping device coupled between the blade and the hub for damping movements of drag caused by rotation of the rotor head. The drag damping device has visco-elastic elements which are pivotable with respect to each other about a common axis. The damping device is also disposed to pivot in a flapping direction of the blade through a pivot joint.

French Patent Publication No. FR2592449A1 discloses a rotary damper comprises a stator and a rotor which are co-axial, circular and cylindrical, two extreme faces substantially transversal to the axis of the stator and rotor and disposed respectively on either side of the stator and rotor, a main chamber filled with a fluid, defined between the extreme faces and the stator and the rotor, blades disposed on the stator and rotor and dividing the main chamber is a plurality of volumes, the blades laminating the flow of fluid through the different volumes of the main chamber, and an auxiliary chamber which communicates with the main chamber.

United States Patent Publication No. 2009/0159382A1 discloses a rotary viscous damper a visco-elastic fluid therein.

United States Patent No. 8,167,561B2 discloses a helicopter rotor damper system including a torsional damper with a damper centering bearing providing a damper center of rotation axis, a first elastomeric torsional damper with a first elastomeric torsional damper torsional elastomer bonded between a first elastomeric torsional damper first torsional damper non-elastomeric bonding surface and a first elastomeric torsional damper second torsional damper non-elastomeric bonding surface, and a second elastomeric torsional damper with a second elastomeric torsional damper torsional elastomer bonded between a second elastomeric torsional damper first torsional damper non-elastomeric bonding surface and a second elastomeric torsional damper second torsional damper non-elastomeric bonding surface. The helicopter rotor damper system includes a damper link linked with the torsional damper, with the torsional damper and the damper link connected between a helicopter blade and a helicopter rotor with the elastomeric torsional damper non-elastomeric bonding surfaces relatively rotating.

United States Patent No 8,356,977B2 discloses a rotary damper for controlling helicopter motions including an outer canister with an inner paddle wheel receiving cavity which receives an inner paddle wheel with upper and lower elastomeric tubular intermediate members between the inner paddle wheel and the outer canister. The canister and inner paddle wheel form neighboring variable volume chambers in liquid communication through liquid damping conduits. A clockwise rotation of the inner paddle wheel about the center of rotation axis relative to the outer canister pumps damper liquid from a second variable volume chamber through a first liquid conduit towards a first variable volume chamber, and a counterclockwise rotation of the paddle wheel relative to the outer canister pumps the damper liquid from the first variable volume chamber through the first liquid conduit towards the second variable volume chamber with the elastomeric tubular intermediate members providing for the relative rotation and containing the damper liquid in the damper.

### SUMMARY

According to the present invention there is provided a rotary damper as recited in claim 1.

### BRIEF DESCRIPTION OF THE DRAWINGS

Figure 1 is a side perspective view illustrating a rotary damper according to some embodiments.
Figure 2 is a top perspective view illustrating a rotary damper according to some embodiments.
Figure 3 is a sectional view illustrating a rotary damper according some embodiments.
Figure 4 is a top sectional view illustrating a rotary damper according to some embodiments.
Figure 5A is a sectional view illustrating a rotary damper according to some embodiments.
Figure 5B is a detailed view illustrating a primary liquid orifice as seen in Figure 5A.
Figure 6A is a sectional view illustrating a rotary damper according to some embodiments.
Figure 6B is a detailed view illustrating a two-way liquid pressure relief valve as seen in Figure 6A.
Figure 7 illustrates one or more rotary dampers incorporated into an aircraft rotary wing system according to some embodiments.

### DETAILED DESCRIPTION

Numerous objects and advantages of the subject matter will become apparent as the following detailed description of the preferred embodiments is read in conjunction with the drawings, which illustrate such embodiments.

The subject matter disclosed herein is directed to novel rotary dampers, systems. For ease of understanding, the non-limiting example of a rotary aircraft is used throughout to include the device, and related methods for use and installation within a rotary wing aircraft. However, it is understood that the system described herein is applicable to any system having a rotary damper. For example, other applications include but are not limited to civil, industrial, and automotive, including any application where damping is needed for control of vibrations where a torsional damper would be preferred.

In some embodiments, novel rotary dampers provided herein include one or more resilient members adapted to dynamically seal damping fluid within the rotary damper, while being externally visible. Incorporation of resilient members within portions of rotary dampers decreases both the cost and weight associated with providing dampers. In addition, as the resilient members are externally visible, rotary dampers provided herein have improved ease of inspection, as the dampers do not need to be removed from the rotary winged aircraft to inspect and do not require specialized inspection equipment.

In some embodiments, the resilient members are partially visible, uncovered, or substantially unobstructed from view about an outer perimeter of a rotary damper. In some embodiments, the resilient members are at least substantially or fully visible about the outer perimeter of a rotary damper.

In some embodiments, the resilient members include elastomer or elastomeric materials improving the stiffness of rotary dampers and systems provided herein. Improved stiffness, as a result of elastomer materials, results in low damping and provides minimal change in stiffness over the operating temperature range of the helicopter.

In some embodiments, the resilient members are tapered. In some embodiments, the resilient members are substantially disk shaped, and include torsional springs having a high elastic stiffness.

In some embodiments, the resilient members are installed by sliding each member in horizontally from a side of the damper.

Reference is made in detail to possible aspects or embodiments of the subject matter herein, one or more examples of which are shown in the figures. Each example is provided to explain the subject matter and not as a limitation. In fact, features illustrated or described as part of one embodiment is used in another embodiment to yield still a further embodiment. It is intended that the subject matter disclosed and envisioned herein covers such modifications and variations.

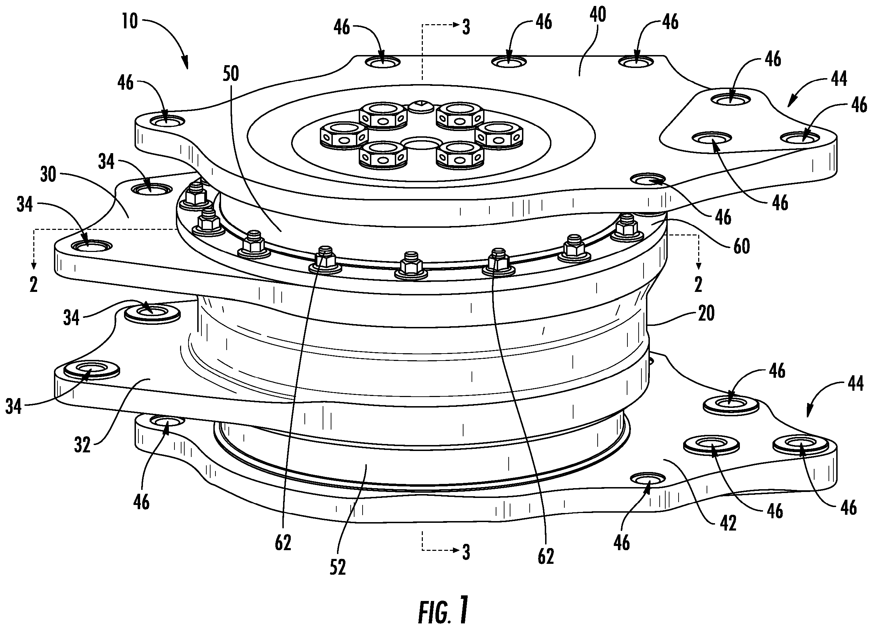

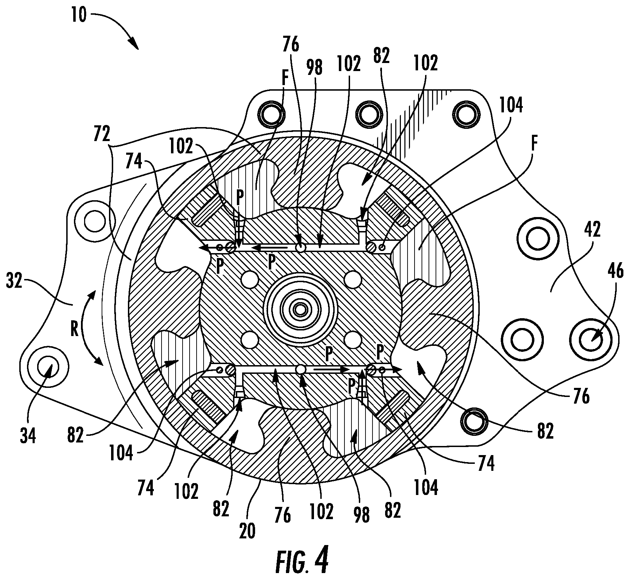

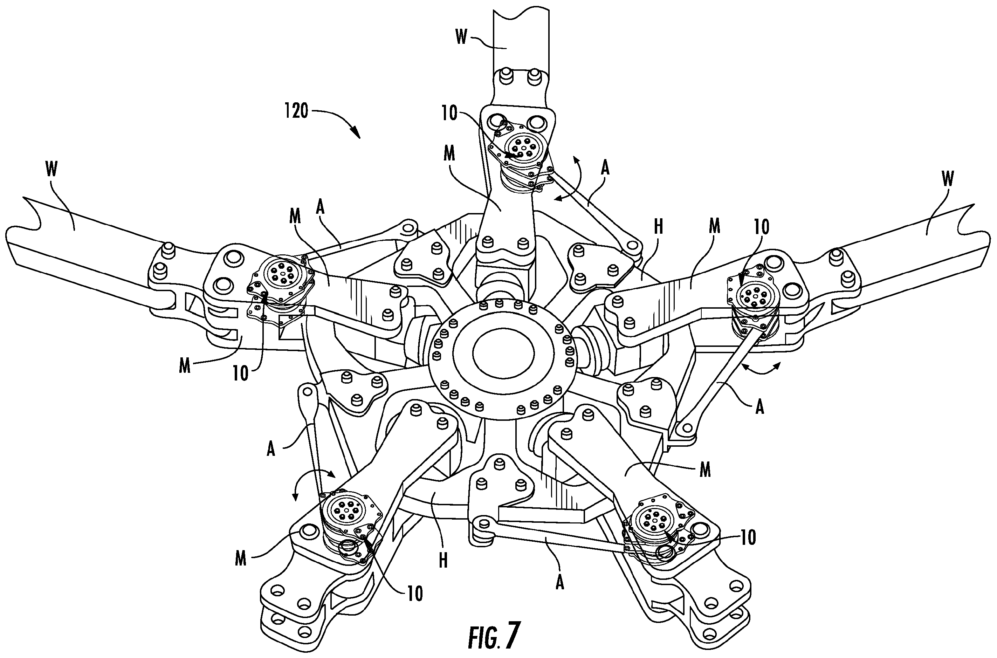

Figures 1 to 7 illustrate various views and/or features associated with rotary lead lag dampers or damper systems associated with rotary wing aircraft. In some embodiments such as illustrated in Figures 1 to 4, a rotary damper generally designated **10** is provided. Rotary damper **10** includes an outer housing comprising an outer canister member **20** disposed between one or more canister fixation members. Canister member **20** includes a non-elastomeric material, such as a metal or metal alloy and configured to house one or more volumes of damping fluid **F** as illustrated in Figures 4 to 6B. Damping fluid **F** (Figures 4 to 6B) is adapted to flow in response to pressure differentials within rotary damper **10** to damp lead lag motions associated with articulated rotor blades of a rotary wing aircraft (Figure 7). Damping fluid **F** (Figures 4 to 6B) is configured to damp the lead lag motion associated with the aircraft, for preventing of catastrophic failure of the aircraft caused by ground resonance phenomena.

In some embodiments, canister member **20** is disposed between one or more canister fixation members. For example, canister member **20** is disposed between a first, upper canister fixation member **30** and a second, lower canister fixation member **32.** Canister member **20** is integrally formed with portions of upper and lower canister fixation members **30** and **32** for forming an outermost housing. In other embodiments, canister member **20** include a discrete body of material coupled to portions of canister fixation members **30** and **32** via one or more mechanical fastening members, such as one or more bolts, nuts, screws, combinations thereof, or via metal-to-metal adhesive, solder, or via welding.

Upper and lower canister fixation members **30** and **32** include a non-elastomeric material such as a metal or metal alloy. In some embodiments, upper and lower canister fixation members **30** and **32** are integrally formed with and/or include the same material as canister member **20.** In other embodiments, canister fixation members **30** and **32** include discrete members that are either the same as and/or a different material than canister member **20.** Upper and lower canister fixation members **30** and **32** are adapted to engage and/or connect to a portion of a rotary wing control arm **A** (Figure 7). In some embodiments, upper and lower canister fixation members **30** and **32** include one or more openings, holes, or apertures, generally designated **34** disposed in a connecting end of upper and lower canister fixation members **30** and **32,** respectively. Apertures **34** defined in upper canister fixation member **30** are at least partially aligned over apertures **34** defined in lower canister fixation member **32.** These openings serve as points of physical and mechanical linkage or connection between portions of upper and lower canister fixation members **30** and **32** portions of rotary wing control arm **A** (Figure 7). Thus, rotation of rotary wing control arm A causes rotation of and/or transfer of motion to upper and lower fixation members **30** and **32,** respectively.

In some embodiments, portions of upper and lower canister fixation members **30** and **32** are physically and mechanically attached or connected to at least one rotary wing control arm **A** (Figure 7) via provision of one or more mechanical fastening members through portions of apertures **34** aligned between upper and lower canister fixation members **30** and **32.** Fastening members positioned through apertures **34** may mechanically connect portions of canister fixation members **30** and **32** to portions of rotary wing control arm **A** (Figure 7). Mechanical fastening members may include bolts, nuts, clips, pins, screws, rivets, hooks, combinations thereof, and/or any other suitable member adapted to mechanically couple various components. Lead lag motions from control arm **A** are transferred to rotary damper **10** via canister fixation members **30** and **32** and fluid **F** contained therein as shown, for example in Figure 7, thereby allowing rotary damper **10** to damp the motions.

In some embodiments as illustrated in Figures 1-4, rotary damper **10** further includes one or more machine fixation members adapted to fixedly couple a portion of rotary damper **10** to a portion of a rotary wing aircraft, such as a portion of a helicopter. In one aspect, the one or more machine fixation members include a first, upper machine fixation member **40** and a second, lower machine fixation member **42.** Upper and lower machine fixation members **40** and **42** include a non-elastomeric material, such as a metal or metal alloy. Each of the upper and lower machine fixation members **40** and **42** include a connecting end extending therefrom, generally designated **44.** Connecting ends **44** of upper and lower machine fixation members **40** and **42** may at least partially align with respect to each other and be disposed on a same side of rotary damper **10** opposite from where the one or more apertures **34** of canister fixation members are located.

In some embodiments, each of upper and lower machine fixation members **40** and **42,** respectively, include one or more apertures, generally designated **46.** Apertures **46** are disposed in portions of connecting end **44** of each fixation member. In addition, apertures **46** are at least partially disposed proximate outermost edges of and/or about a perimeter of upper and lower fixation members **40** and **42.** In some embodiments, apertures **46** disposed in upper fixation member **40** may at least partially align over apertures **46** disposed in lower fixation member **42.** Upper and lower machine fixation members **40** and **42** include uppermost and lowermost portions of rotary damper **10.** That is, upper and lower machine fixation members **40** and **42** may physically and fixedly connect to portions of a rotary wing case member **M** (Figure 7) via apertures **46** such that rotary damper **10** is fully contained therebetween.

Fastening members are positioned through apertures **46** for mechanically connecting portions of machine fixation members **40** and **42** to portions of rotary wing case member **M** (Figure 7). Mechanical fastening members may include, for example, bolts, nuts, clips, pins, screws, rivets, hooks, combinations thereof, and/or any other suitable member adapted to mechanically couple different components. The physical linkage or connection between machine fixation members **40** and **42** transfers vibrational motions associated with rotary wing case member **M,** such as a pitch case or tension link of a helicopter, to rotary damper **10** such that the lead lag motion of a given rotary wing blade or wing **W** (Figure 7) is damped. Rotary damper **10** includes any suitable size and may vary in size depending upon the type of rotary wing aircraft used. In some embodiments, rotary damper ranges in regards to an outermost diameter, for example, from about 120 millimeters (mm) to about 350 mm, or from about 4 inches (") to about 15".

Still referring to Figures 1-4, rotary damper **10** includes at least one resilient and/or elastomeric member, for example, at least one resilient and/or elastomeric torsional disk or spring member adapted to twist during rotation of canister fixation members. Resilient and/or elastomeric torsional disk or spring member is also adapted to dynamic seal portions of upper and lower machine fixation members **40** and **42** and portions of canister member **20**, while also providing stiffness to improve the damping characteristics of rotary damper **10**. In some embodiments, rotary damper **10** includes a first resilient member **50** and a second resilient member **52**. Each of the first and second resilient members **50** and **52**, respectively, include an elastomer or an elastomeric material. In some embodiments, first and second resilient members **50** and **52** are disposed adjacent on or about outer portions of the housing of rotary damper, for example, adjacent outermost diameters of canister member **20** and/or adjacent portions of upper and lower fixation members **30** and **32**. Elastomers and/or elastomeric materials exhibit high elastic stiffness values, which are advantageous when incorporated into rotary damper **10** for providing very low damping. Elastomers and/or elastomeric materials are also advantageous when incorporated into rotary damper **10** for exhibiting a minimal change in stiffness over an operating temperature range of the helicopter, which may vary between approximately -40 °C (-40 °F) to 71 °C (160 °F).

In some embodiments, first and second resilient members **50** and **52** include a rubber or rubber material, such as natural rubber, NEOPRENE^{®}, nitrile rubber, isoprene rubber, butadiene rubber, chloroprene rubber, butyl rubber, polyacrylic rubber, silicone rubber, fluorosilicone rubber, fluoroelastomers, polyether block amides, ethylene-vinyl acetate, thermoplastic elastomers, resilin, elastin, polysulfide rubber, combinations thereof, and/or any other suitable elastic and/or resilient material. In some embodiments, first and second resilient members **50** and **52** exhibit a relatively high stiffness or spring rate, which is calculated from the ratio of stress to strain, expressed in Newtons (N) per mm. It may depend on the material's modulus, and also on the shape of the resilient member (e.g., the disk shape).

In some embodiments, first and second resilient members **50** and **52** are configured to provide a high elastic stiffness and damping with minimal performance variation over a given operating temperature range within a helicopter, in particular at low damper rotation amplitudes (e.g., < 1 degree) in order to prevent ground resonance. As operating temperatures may vary between approximately -40 °C (-40 °F) to 71 °C (160 °F), resilient members **50** and **52** are advantageous as mechanical properties associated with elastomers may prevent significant physical degradation or adverse changes within each resilient member during operation at such temperatures and/or sub-ranges thereof.

In some embodiments, each of the first and second resilient members **50** and 52 include a suitable structure such as a torsional disk or a torsional spring member, which is at least partially disposed about external portions of rotary damper **10**. In some embodiments, first and second resilient members **50** and **52** include torsional spring members adapted to twist and/or be loaded in torsional shear during rotation of canister fixation members while dynamically sealing damping fluid within damper **10**. In some embodiments, first and second resilient members **50** and **52** are disposed about external portions of rotary damper **10** such that each is visible from the outside, or externally visible with respect to damper **10**. In some embodiments, the resilient members re installed by sliding each member in horizontally from a side of the damper. In some embodiments, upper machine fixation member **40** and upper canister fixation member 30 are spaced apart such that a portion of first resilient member **50** is visible at least approximately 360° about the perimeter and/or circumference of rotary damper **10**. In some embodiments, lower machine member **42** and lower canister fixation member **32** are also positioned or spaced apart such that portions of second resilient member **52** are visible at least approximately 360° about the perimeter and/or circumference of rotary damper **10**.

In some embodiments, a distance between upper machine fixation member **40** and upper canister fixation member **30** is approximately equal to the thickness of the first resilient member **50**, as it is possible to position these members without requiring an intermediary structure or attachment surface between upper fixation member **40**, first resilient member **50**, and upper canister fixation member **30**. In some embodiments, lower canister fixation member **32**, second resilient member **52**, and lower machine fixation member **42** are similarly disposed. Such placement is advantageous, as first and second resilient members **50** and **52** may be visually inspected for damage (e.g., cracking, having breaks or gaps, failing to seal) without having to physically remove rotary damper **10** from the aircraft and/or without requiring special inspection equipment. That is, in some embodiments rotary damper **10** is disposed within a wing case member M (Figure 7) such that the damper **10** is installed without any visible obstruction of first and second resilient members **50** and **52,** by any portion of the wing case member **M.**

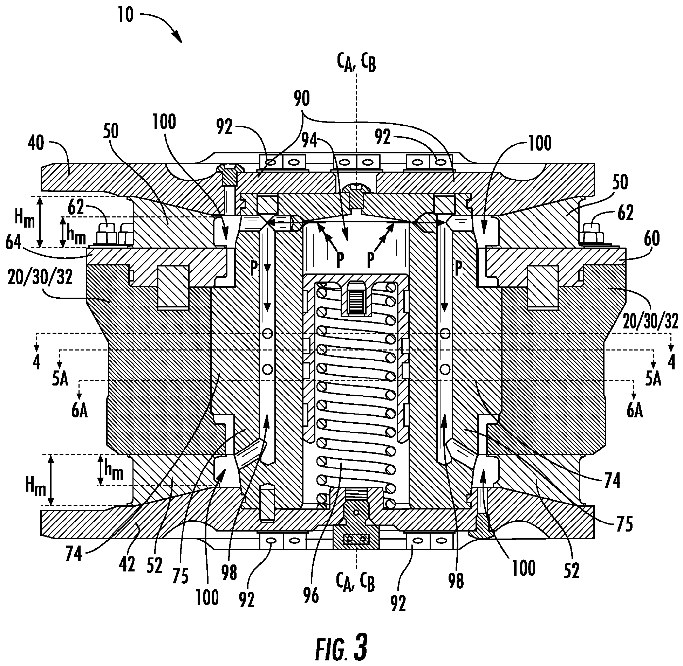

First resilient member **50** is disposed between portions of upper machine fixation member **40** and upper canister fixation member **30** for providing dynamic sealing therebetween. Second resilient member **52** is disposed between portions of lower machine fixation member **42** and lower canister fixation member **32** for providing dynamic sealing therebetween. As discussed further below, first and second resilient members **50** and **52** may also dynamically seal damping fluid internally within damper **10,** for example, within portions of solid state pressure chambers **100** (Figure 3). First resilient member **50** is secured to portions of upper machine fixation member **40** and upper canister member **30,** for example, via adhesive, glue, curable epoxy, physical attachment members, or fasteners such as screws, rivets, bolts, etc., combinations thereof, or by any other suitable fastener or attachment member. Similarly, second resilient member **52** is secured to portions of lower machine fixation member **42** and lower canister fixation member **32** for example via adhesive, glue, curable epoxy, physical attachment members, or fasteners such as screws, rivets, bolts, staples, clips, hooks, etc., combinations thereof, or by any other suitable fastener or attachment member/methodology.

Still referring to Figures 1-4 and in some embodiments, first and second resilient members **50** and **52** are disposed directly adjacent upper and lower machine fixation members **40** and **42,** respectively. In some embodiments, resilient member **50** attaches to a portion of upper canister fixation member **30** via a primary attachment plate **60.** One or more attachment members **62** or fasteners are disposed between portions of first resilient member **50** and portions of upper canister fixation member **30**. Attachment members **62** include any suitable fastener known in the art, including for example a bolt, screw, rivet, pin, hook, clasp, clip, or nail. Where attachment member **62** includes a bolt, a correspondingly shaped nut is threaded about portions of each thereof. In some embodiments, canister member **20** and/or a housing comprised of canister member **20** and fixation members is disposed between portions of first and second resilient members **50** and **52**.

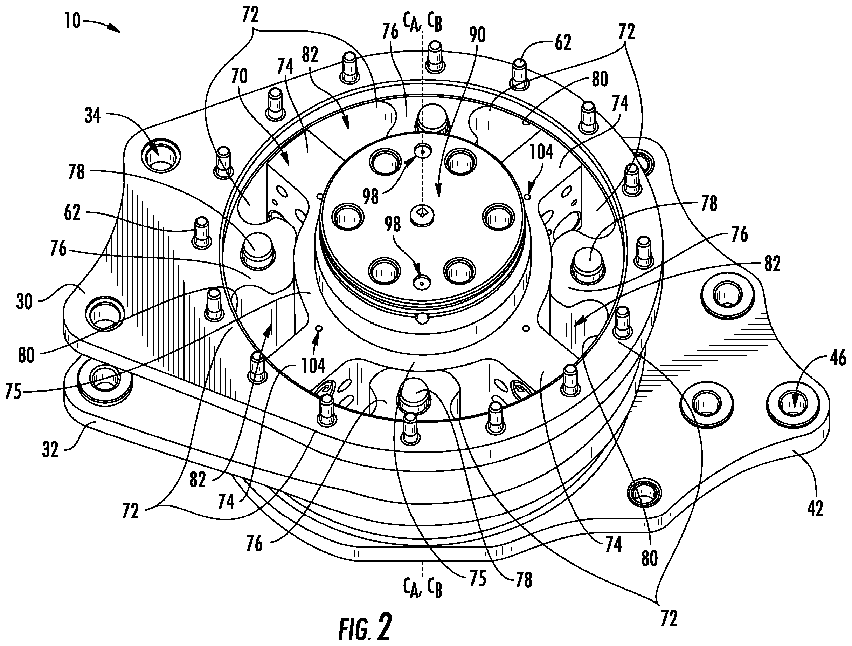

In some embodiments including for example Figure 2, a rotor assembly generally designated **70** is disposed within at least a portion of the housing including canister member **20** (Figure 1). Rotor assembly **70** may, for example, include an elongated body substantially longitudinally aligned within a portion of canister member **20** (Figure 1), and in some embodiments, rotor assembly **70** is centrally disposed with respect to and disposed along a central axis of rotation **C_{A}** of rotary damper **10**.

Rotary damper **10** includes at least one inner rotor assembly cavity **72** adapted to receive a portion of rotor assembly **70,** for example, at least one radially extending rotor member **74.** In some embodiments, at least one radially extending rotor member **74** extends outwardly from a rotary wheel **75,** and each rotor member **74** is adapted for positioning in portions of each rotor assembly cavity **72**. In some embodiments, each radially extending rotor member **74** divides each cavity **72** into more than one portion, such as two portions, for example. In some embodiments, a pressure differential is created between portions of cavity **72** during operation of damper **10**. In some embodiments, rotary damper **10** further includes at least one radially extending divider **76** adapted to engage a portion of rotor assembly **70**. The least one divider **76** extends from portions of canister member **20** (Figure 1) and fixation members **30** and **32** inwardly toward axis of rotation **C_{A}** of rotary damper **10**.

In some embodiments, each radially extending rotor member **74** and each divider **76** include a non-elastomeric material, such as metal or metal alloy. Rotary damper **10** includes one or more dividers **76,** such as, for example, two radial dividers including a first radially extending divider and a second radially extending divider. In some embodiments, rotary damper **10** includes more than two dividers **76,** such as, for example, three radial dividers including a first, a second and a third radially extending divider. For illustration purposes, rotary damper **10** is shown as comprising four dividers 76; however, more or less than four dividers **76** are contemplated. Dividers **76** are spaced apart at uniform increments, or at non-uniform (e.g., different) increments.

In some embodiments, each radially extending divider **76** is integrally formed with portions of canister member **20** and/or upper and lower canister fixation members **30** and **32**, respectively. Each divider **76** may optionally be attached to portions of primary attachment plate **60** (Figure 1) and upper canister fixation member **30** via one or more attachment members **78** disposed between portions of the radially extending dividers **76** and attachment plate **60** (Figure 1). Attachment members **76** include any suitable fastener known in the art, including for example a bolt, screw, rivet, pin, hook, clasp, clip, nail, combinations thereof, or other suitable fastener.

Still referring to Figure 2 inner rotor assembly **70** includes an axis of rotation **C_{B}** that in some embodiments, is coincident with a first axis of rotation, including **C_{A}** of rotary damper **10**. Inner rotor assembly **70** includes at least one radially extending rotor member **74** that projects outwardly from a center of inner rotor assembly **70** towards an outermost wall or outermost point along the diameter of canister member **20** of damper **10.** In some embodiments, rotor member **74** extends outwardly from a center of damper **10** towards, and contacts, a portion of an inner wall **80** of inner rotor assembly receiving cavity **72**. Inner rotor assembly **70** of rotary damper **10** includes at least one radially extending rotor member **74,** more than one radially extending rotor member **74,** more than two radially extending rotor members **74,** or more than four radially extending rotor members **74,** although for illustration purposes, four are shown. Any number of radially extending rotor members **74** is provided. Radially extending rotor members **74** are spaced apart at uniform increments or non-uniform increments.

In some embodiments, a portion of inner rotor assembly **70** is received in portions of inner rotor assembly receiving cavity **72** in such a way that the radially extending rotor members **74** and radially extending dividers **76** form variable volume chambers, generally designated **82**. That is, each cavity **72** is divided into one or more portions, including one or more variable volume chambers **82**.

In some embodiments, inner rotor assembly **70** further includes and/or is provided about a backfill system **90** adapted to maintain positive pressure of the damper liquid contained in the rotary damper **10**. In some embodiments, rotary damper **10** includes one or more pressure equalization ports **98** disposed in portions of backfill system **90**. Damping fluid is adapted to flow between areas of high and low pressure in efforts to equalize pressure via pressure equalization ports **98**. Damping fluid is adapted to flow between pressure equalization ports **98** and one or more check valve orifices **104** offset and radially disposed in portion of rotor assembly **70**. In some embodiments, pressure equalization ports **98** and check valve orifices **104** are substantially parallel within portions of rotary damper **10**.

In some embodiments, a plurality of radially extending rotor members **74** and a plurality of radially extending dividers **76** are provided in rotary damper **10**. Radially extending rotor members **74** are also referred to as rotor vanes **74**. The plurality of radially extending rotor members **74** is provided between the plurality of radially extending dividers **76,** such that at least a first radially extending rotor of the plurality of rotor members **74** is disposed between a first and a second radially extending divider of the plurality of radially extending dividers **76,** thereby forming a first variable volume chamber of a plurality of variable volume chambers **82**. Each variable volume chamber **82** of a plurality of chambers is configured to contain a damping fluid or liquid, generally designated **F** (Figures 4 to 6B). Damping fluid **F** include any suitable material, including for example an oil or oil-based material, a silicone or silicon-based material, smart fluids (e.g., magneto-rheological MR fluid), or any other suitable liquid for damping vibrations, movements, or motions.

Referring to Figure 3, backfill system **90** is adapted to maintain positive pressure of a damping liquid or damping fluid **F** (Figures 4 to 6B) contained within portions of rotary damper **10.** Backfill system **90** includes a top plate having one or more openings, holes, or apertures generally designated adapted to receive one or more attachment members **92.** Attachment members **92** may attach a portion of backfill system **90** to upper and/or lower machine fixation members **40** and **42**. Attachments members **92** include any suitable fastener known in the art, including for example a bolt, screw, rivet, pin, hook, clasp, clip, nail, or combinations thereof.

In some embodiments, backfill system **90** includes a volume compensator **94** adapted to apply and maintain a steady state pressure applied to damping fluid F by providing conduits for fluid to communicate between chambers **82** (Figure 2). Backfill system **90** may further include a compensator, such as for example, a spring-driven piston compensator **96** disposed within a portion of volume compensator **94**. In some embodiments, piston compensator **96** attaches to portions of lower machine fixation member **42**. Volume compensator **94** is in liquid communication with variable volume chambers **82** via pressure equalization ports **98** that may be disposed in portions of rotor assembly **70**.

In some embodiments, pressure equalization ports **98** extend internally within portions of rotor assembly and connect to one or more positive pressure chambers **100** for moving damping fluid therebetween. In some embodiments, pressure equalization ports **98** include conduits by which damping fluid **F** (Figures 4-6B) communicates between portions of volume compensator **94** and variable volume chambers **82** via one or more liquid bleed orifices **102** (Figure 4) and/or check valve orifices **104** (Figures 2, 4). That is, damping fluid **F** (Figure 4) may move between portions of pressure equalization ports **98,** liquid bleed orifices **102,** and check valve orifices **104** in response to rising or dropping pressure for equalizing pressure and damping lead lag motions associated with a rotary winged aircraft.

In some embodiments, as illustrated in Figure 3, a direction of fluid flow as it would exit volume compensator **94** during operation may flow along portions of pressure equalization ports **98** between one or more positive pressure chambers **100** in response to positive pressure supplied by volume compensator **94**. At least one or more positive pressure chambers **100** are at least substantially vertically aligned within damper **10**. Notably, damping fluid is communicated within backfill system **90** between portions of volume compensator **94,** liquid bleed orifices **102,** and the check valve orifices **104,** each of which can allow rotary damper **10** to operate at a low pressure, thereby increasing the operating range of rotary damper **10** and thereby improving the safety of the rotary damper **10.**

In some embodiments as illustrated in Figure 3, first and second resilient members **50** and **52,** respectively, include any suitable height and/or thickness and are at least substantially or fully visible outside of rotary damper **10**. In some aspects, first and second resilient members **50** and **52** are uncovered, exposed, and/or substantially unobstructed from view outside of rotary damper **10**. In some embodiments, each of first and second resilient members **50** and **52** include, for example, a maximum height **H_{M}** of approximately 5 mm or more. Each of first and second resilient members **50** and **52** taper from maximum height **H_{M}** proximate an outermost diameter of damper **10** housing to a minimum height **hₘ** proximate a center of damper **10**. Tapered first and second resilient members **50** and **52** improve ease of installation or assembly with respect to damper **10,** reduce weight, and provide torsional springs, which may be only loaded in torsional shear. Shear loading may be preferred since it provides an almost linear spring constant up to strains of about 200 percent. This linearity is constant with frequency for both small and large dynamic shear strains. Notably, first and second resilient members **50** and **52** are adapted to dynamically seal damping fluid internally within portions of steady state pressure chambers **100** as well externally seal portions of canister member **20** between upper and lower housing fixation members **40** and **42**.

In some embodiments, first and second resilient members **50** and **52** are positioned such that external surfaces of each member are proximate an outer diameter of damper **10**. This may advantageously allow first and second resilient members **50** and **52** to be easily inspected while damper **10** remains installed in the aircraft rotor. Installation into a helicopter rotor allows on-condition inspection of the elastomer resilient members (e.g., **50, 52**) without the need for special inspection equipment or removal of damper **10** from the helicopter. In some embodiments, externally visible first and second resilient members **50** and **52,** respectively, improve the ease of inspection as cracks, gaps, or sealing failures are visible from the outside of damper **10** without having to remove damper **10** from the helicopter. Thus, in some embodiments, damaged parts, including damaged resilient members, may be discovered and replaced on a more frequent basis because of the improved ease of inspection.

In some embodiments, each of each of first and second resilient members **50** and **52** includes a maximum height **H_{M}** ranging, for example, between approximately 5 mm and approximately 12" and any sub-range or dimension therebetween, such as between approximately 5 mm and 10 mm, between approximately 10 mm and 100 mm, between approximately 2" and 4", between approximately 4" and 6", between approximately 6" and 8", or more than approximately 8". Any height(s) and/or thickness(es) of resilient members **50** and **52** may be provided. Maximum heights **Hₘ** taper to minimum heights **hₘ** towards the center of damper **10**. Minimum heights **hₘ** can vary between, for example, approximately 1 mm and 6", for example such as between approximately 1 mm and 10 mm, between approximately 10 mm and 20 mm, between approximately 20 mm and 100 mm, between approximately 2" and 4", or between approximately 4" and 6". Notably, the constant taper between maximum and minimum heights provides for balanced shear strain behavior, thereby further improving stiffness and overall damping capabilities.

In some embodiments, first and second resilient members **50** and **52** are disposed between portions of canister member **20** and machine fixation members **40** and **42** and are connected thereto via any suitable fastener or adhesive known in the art, including a rubber to metal adhesive. In some embodiments, canister member **20** is fully and/or partially disposed between portions of first and second resilient members **50** and **52,** respectively. In some embodiments, first and second resilient members **50** and **52** provide dynamic sealing between portions of rotor assembly **70** (e.g., portions of positive pressure chambers **100**) and canister member **20**. First and second resilient members **50** and **52** provide improved retention of the damper liquid within the rotary damper **10** during its range of operating temperatures as compared to traditional tube form bearings. In addition, the disk-like shape of each resilient member, such as first and second resilient members **50** and **52**, provides improved elastic stiffness by accommodating relative motion between rotor assembly **70** and canister member **20**. In addition, the disk-like shape and external placement of first and second resilient members **50** and **52** makes it substantially unreactive to damper loads (e.g., as it is not centrally disposed within damper **10**), such that resilient members are loaded in torsional shear.

As described above, in some embodiments, first and second resilient members **50** and **52** may uniformly taper between maximum and minimum heights creating a constant shear strain in the resilient member section, thereby maintaining a constant rate of deformation in the resilient members and maximizing the fatigue life of the resilient member. In some embodiments, first and second resilient members **50** and **52** include, for example, a tapered cross-sectional profile that tapers inwardly and/or downwardly toward the axis of rotation **C_{A}** of damper **10**. In some embodiments, first and second resilient members **50** and **52** have a substantially circular and disk shape. The disk shape maximizes upper and lower surface load area characteristics of the resilient members, thereby providing higher stiffness characteristics and allowing the resilient members to act as dynamic springs during the operation of the rotary damper **10.**

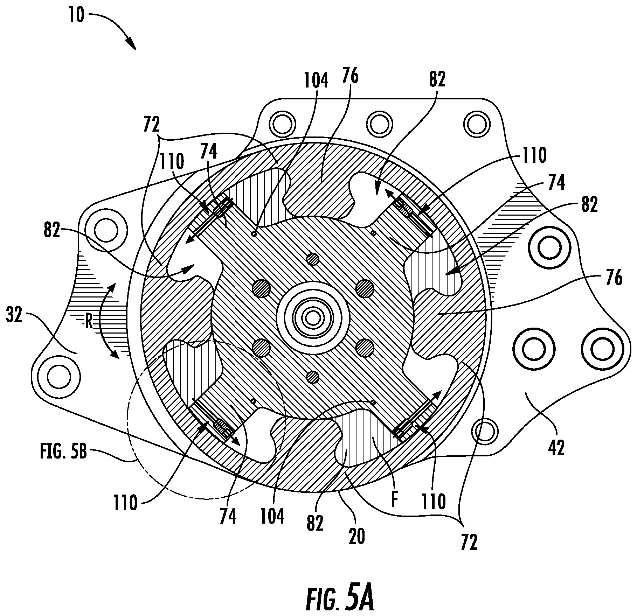

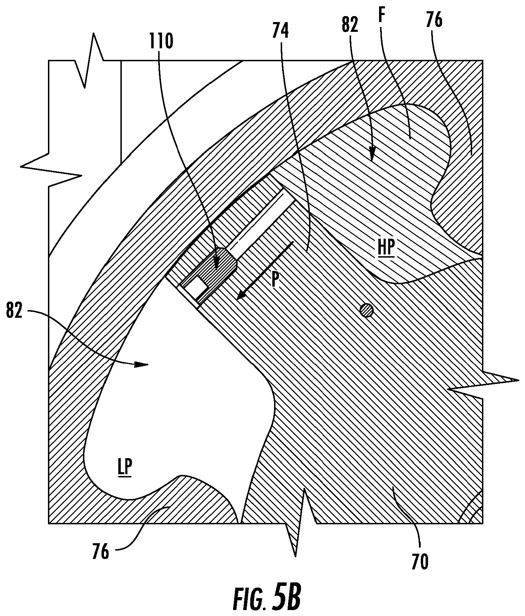

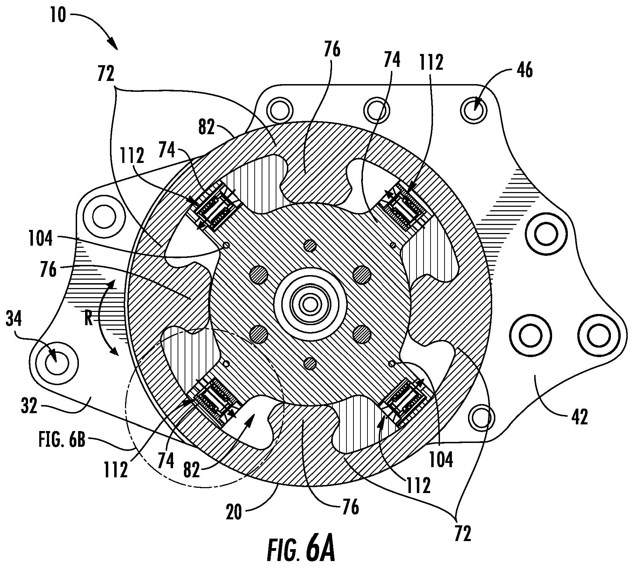

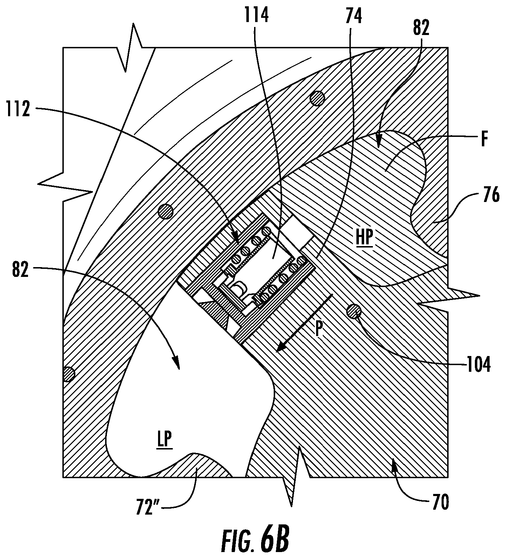

In some embodiments, as shown in Figures 4 to 6B, damping fluid **F** is communicated between volume compensator **92** and one or more variable volume chambers **82** via one or more passages, channels, conduits, and/or orifices which may include one or more liquid bleed orifices **102** (Figure 4), one or more primary liquid orifices **110** (Figures 5A and 5B), one or more check valve orifices **104** (Figure 4), and/or one or more relief valve orifices **112** (Figures 6A and 6B). Damping fluid **F** includes or consists of any suitable fluid or liquid known to the art, including for example and without limitation, a silicone or silicone-based liquid with high viscosity, operability at a wide temperature range, and high lubrication characteristics. The communication of damping fluid **F** between variable volume chambers **82** creates a damping force on radially extending rotor members **74** and the radially extending dividers **76** such that the overall lead lag motion of the rotary wing is damped during operation of the aircraft, thereby preventing the development of ground resonance phenomena.

In some embodiments as shown in Figure 4, during operation damper **10,** damping fluid **F** follows along one or more paths **P** during changes in pressure. Damping fluid **F** may flow from areas of high pressure (indicated in hatched lines) to areas of lower pressure (in white) via one or more orifices. Thus, volume of damping fluid **F** within a first variable volume chamber **82** becomes lessened as pressure increases in that chamber, and volume of damping fluid **F** will increase to areas of lower pressure in, for example, an adjacent variable volume chamber **82**. That is, in some embodiments damping fluid **F** may flow between adjacent chambers **82** via orifices, and may move from areas of high pressure into areas of lower pressure, increasing volume within the latter.

In some embodiments, one or more liquid bleed orifices **102** is disposed between portions of adjacent chambers **82** and is adapted to restrict flow of damping fluid **F** such that positive pressure build-up is prevented in a first variable volume chamber. The flow of liquid depicted in Figure 4 is the result of the relative movement of the housing comprised of canister member **20** and canister fixation members **30** and **32** in a counter-clockwise rotational movement or direction designated **R.** Rotational movement **R** is communicated from the helicopter to damper **10** via the attachment of upper and lower canister fixation members **30** and **32** to control arm **A** (Figure 7).

Upper and lower machine fixation members **40** and **42** are fixedly held between portions of wing case member **M** (Figure 7) as rotary damper **10** housing or canister member **20** rotates via motion transmitted to upper and lower fixation members **30** and **32**. Liquid bleed orifices **102** include paths that are substantially orthogonal to one or more pressure equalization ports **98** and/or one or more check valve orifices **104**. In some embodiments, liquid bleed orifices **102** are adapted to connect portions of pressure equalization ports **98** to portions of check valve orifices **104.** In some embodiments, liquid bleed orifices **102** are adapted to extend through portions of rotor member **74** and/or portions of volume compensator **94**.

Still referring to Figure 4, one or more check valve orifices **104** is disposed in one or more radially extending rotor members **74**. Check valve orifices **104** are adapted to restrict flow of damping fluid **F** from volume compensator **94** as the pressure internal a high pressure variable volume chambers **82** decreases to below the positive pressure internal to the rotary damper **10**. Notably, the liquid communication restricted by liquid bleed orifices **102** and check valve orifices **104** allows backfill system **90** to remain dynamically isolated from the pressure differentials generated in the variable volume chambers **82** caused by the relative motion between the radially extending dividers **76** and the radially extending rotor member **74**.

In some embodiments as illustrated in Figures 5A and 5B, each radially extending rotor member **74** include at least one primary liquid orifice **110.** Primary liquid orifices **110** are adapted to restrict flow through the radially extending rotor members **74** and between the variable volume chambers **82**. For example, in some embodiments a first primary liquid orifice **110** is disposed between two adjacent variable volume chambers **82**. In some embodiments, each primary liquid orifice **110** is adapted to provide liquid communication between adjacent variable volume chambers **82,** such as between a first and a second variable volume chamber.

In some embodiments as illustrated in Figure 5B, a pressure differential generated by the relative movement between the radially extending dividers **76** and the radially extending rotor members **74** forces damping fluid **F** to move from areas of high pressure **HP,** in a first variable volume chamber **82,** through the primary liquid orifice **110** and to a second, adjacent variable volume chamber **82** at a lower pressure **LP.** Damping fluid **F** may flow as indicated by path P through portions of primary liquid orifice **110** and is restricted by a pressure-driven piston. Damping fluid **F** flows through primary liquid orifice **110** because of pressure differentials generated in variable volume chambers **82** by the relative motion between radially extending dividers **76,** and radially extending rotor members **74,** as canister member **20** (Figure 5A) moves in the counterclockwise rotational direction R (Figure 5A) with respect to the axis of rotation **C_{A}** (Figure 3) of rotary damper **10**.

In some embodiments as illustrated in Figures 6A and 6B, rotary damper **10** may further include one or more liquid relief valve orifices **112** disposed in portions of radially extending rotor members **74**. Liquid relief valve orifices **112** are disposed between adjacent variable volume chambers **82**. In some embodiments, liquid relief valve orifices **112** are adapted to restrict liquid flow through the rotor members **74** and between adjacent variable volume chambers **82**. In some embodiments, two liquid relief valve orifices **112** are provided between each set of dynamic variable volume chambers **82** to limit the pressure differential across each rotor member **74** or rotor vane. In some embodiments, liquid relief valve orifices **112** provide a constant pressure differential across rotor members **74,** in order to limit damper loads and minimize the performance variation over the operating temperature range of the aircraft. In some embodiments, fluid flow paths along orifices between rotor assembly **70** and housing and the fluid viscosity create a high pressure differential across the rotor members **74** at very low damper rotation amplitudes. This pressure differential is high enough to open liquid relief valve orifices **112,** which allows liquid relief valve orifices **112** to control damping at low damper rotation amplitudes in order to prevent ground resonance.

In some embodiments, each liquid relief valve orifice **112** may open and close via a spring-driven relief valve member **114** as illustrated in Figure 6B. In some embodiments, spring-driven relief valve member **114** is displaced by a sufficiently high pressure differential across the first radially extending rotor member **74**. For example, when a pressure differential exists as shown in Figure 6B between areas of high pressure **HP** and lower pressure **LP,** relief valve member **114** may compress and allow damping fluid F to flow from a first variable volume chamber **82** to a second, adjacent variable volume chamber **82** via liquid relief valve orifice **112**. Notably, the communication of damper fluid via relief valve orifice **112** provides a constant pressure differential across radially extending rotor members **74** in order to limit the damping loads, thereby minimizing the performance variation over the operating temperature range of the rotary damper **10,** and for preventing cracking pressure that would cause the catastrophic failure of rotor members **74** and/or the dividers **76**.

In some embodiments, according to Figure 7, an aircraft includes more than one rotary damper **10** installed therein/thereon. In some embodiments, more than one rotary damper **10** is incorporated into a rotary wing system, generally designated **120**. Each rotary damper **10** is disposed between a portion of a respective rotary wing case member **M,** such as a pitch case or tension link of a helicopter. In some embodiments, one rotary damper **10** is disposed proximate to and associated with each rotary blade or wing **W** of an aircraft. Notably, rotary damper **10** is externally visible or inspect-able for adequate sealing, cracks, gaps, and other failure mechanisms without having to disassemble rotary dampers **10** from rotary wing system **120**. In some embodiments, each rotary damper **10** is installed into a rotary wing system **120** such that the upper and lower resilient members **50** and **52** (Figures 1, 3) is visually inspected during operation without removal of damper **10** from system **120**. That is, in some embodiments rotary damper **10** is disposed within a wing case member **M** such that the damper **10** is installed without any visible obstruction or covering of first and second resilient members **50** and **52** by any portion of the wing case member **M,** such as a shroud cover, encasement, or enclosure. In some aspects, each resilient member **50** and **52** is fully visible about a perimeter of damper **10**, or about the entire 360° viewing angle of damper. Notably, first and second resilient members **50** and **52** are slidably replaceable within portions of damper, thereby improving ease of installation.

In some embodiments, and during operation of a rotary wing aircraft, upper and lower canister fixation members **30** and **32** may rotate together as illustrated in double-sided arrows through a rotation angle relative to upper and lower machine fixation members **40** and **42**. The machine fixation members **40** and **42** are stationary with respect to inner rotor assembly **70** (Figure 3). As the rotary wing aircraft experiences vibrations in the rotary wing system **120,** a rotary wing hub **H** transfers a corresponding force through control arms **A.** Control arm **A** may then transfer the force to rotary damper **10** via upper and lower canister fixation members **30** and **32**. The force transferred via control arm **A** creates a relative motion of canister **20** relative to the machine fixation members **40** and **42,** and the wing case member **M.** The rotation of the canister fixation members **30** and **32** damps the lead lag motion of the rotary wing by pressurizing and pumping damping fluid **F** (Figures 4 to 6B) through one or more bleed valve orifices **102,** check valve orifices **104,** primary liquid orifices **110,** pressure equalization ports **98,** positive pressure chambers **100,** and/or relief valve orifices **112,** thereby developing pressure differentials adapted to damp the overall motion of respective rotary wings **W.**

Rotary wing control arm **A** may move relative to a rotary wing case member **M,** such as a pitch case or tension link of a rotary wing aircraft. The point of connection of the upper and lower canister fixation members **30** and **32** to the control arm **A** translates lead and lag motions to rotary damper **10** via the canister member **20,** thereby allowing damper **10** to damp the overall lead lag motion of each respective individual rotary wing **W** (Figure 7). The relative motion between control arm **A** and the rotary wing case member **M** is shown, for example, in Figure 7.

Embodiments, as disclosed herein, may provide one or more of the following beneficial technical effects: reduced cost providing a rotary damper; reduced weight of rotary damper; high reliability (i.e., < 9 x 10-6 failures per flight hour); longer service life (i.e., > 5000 hours); high elastic stiffness; damping with minimal performance variation over operating temperature range of a helicopter; externally visible from the rotary damper thereby improving ease of installation and inspection without the need to remove the damper from the helicopter; minimal change in stiffness over operating temperature range of helicopter; improved safety; improved operation at low positive pressure; improved load limiting capability that is independent of damper rotation amplitude and temperature, in order to reduce the loads on the damper and its mating component, therefore minimizing the overall weight of the rotor system.

While the present subject matter is described herein in reference to specific aspects, features, and illustrative embodiments, it will be appreciated that the utility of the subject matter herein is not thus limited, but rather extends to and encompasses numerous other variations, modifications and alternative embodiments, as will suggest themselves to those of ordinary skill in the field of the present subject matter, based on the disclosure herein. Various combinations and sub-combinations of the structures and features described herein are contemplated, and will be apparent to a skilled person having knowledge of this disclosure. Any of the various features and elements as disclosed herein may be combined with one or more other disclosed features and elements unless indicated to the contrary herein. Correspondingly, the subject matter herein as hereinafter claimed is intended to be broadly construed and interpreted, as including all such variations, modifications and alternative embodiments, within its scope and including equivalents of the claims.

## Claims

1. A rotary damper (10) for use in a rotary wing aircraft (120), the rotary damper comprising:
a housing, said housing comprising a canister body (20), and upper and lower canister fixation members (30,32), said canister fixation members (30, 32) being adapted to be attached to portions of a rotary wing control arm;
first upper and second lower machine fixation members (40,42) adapted to fixedly couple a portion of rotary damper (10) to a portion of a rotary wing aircraft;
a rotor assembly (70) disposed inside the housing, the rotor assembly comprising a plurality of rotor vanes (74) disposed between a plurality of chambers (82);
first and second resilient members (50, 52) disposed adjacent to outer portions of the housing, said first and second resilient members tapering from the outer portion of the housing towards a center axis of the rotor assembly (70);
wherein the first resilient member is disposed between said upper canister fixation member (30) of the housing and said upper machine fixation member (40), and
said upper machine fixation member (40) and upper canister fixation member (30) are spaced apart such that a portion of the first resilient member (50) is externally visible from outside of the rotary damper (10).

2. The rotary damper (10) of claim 1, wherein the at least one resilient member (50, 52) is an elastomer resilient member and the resilient member is visible 360° about the perimeter of the rotary damper.

3. The rotary damper (10) of claim 1, wherein the at least one resilient member (50, 52) tapers from the outer portion of the housing towards a center axis of the rotor assembly (70).

4. The rotary damper (10) of claim 1, wherein the at least one resilient member (50, 52) comprises a disk shape.

5. The rotary damper (10) of claim 1, wherein the upper canister fixation member (30) of the housing and the upper machine fixation member (40) define a distance which is equal to a thickness of the resilient member (50,52).

6. The rotary damper (10) of claim 1, wherein the lower canister fixation member (32) of the housing and the lower machine fixation member (42) define a distance which is equal to a thickness of the resilient member (50,52).

7. The rotary damper (10) of claim 1, wherein the rotor assembly (70) comprises an elongated body.

8. The rotary damper (10) of claim 7, wherein at least one pressure equalization port (98) is disposed within a portion of the elongated body.

9. The rotary damper (10) of claim 7, wherein one or more check valve orifices (104) are disposed within a portion of the elongated body.

10. The rotary damper (10) of claim 1, wherein the rotor assembly (70) comprises a volume compensator (94) adapted to maintain a positive pressure within the rotary damper (10).

11. The rotary damper (10) of claim 1, wherein a primary liquid orifice (110) is disposed inside a portion of a first rotor of the plurality of rotor vanes (74), wherein the primary liquid orifice (110) is adapted to connect a first and a second chamber of the plurality of chambers (82).

12. The rotary damper (10) of claim 1, wherein a relief valve orifice (112) is disposed inside a portion of a first vane of the plurality of rotor vanes (74), wherein the relief valve orifice (112) opens and closes in response to a pressure differential between a first and a second chamber of the plurality of chambers (82).

13. The rotary damper (10) of claim 1, wherein the rotary damper comprises first and second resilient members (50,52) which are positioned such that external surfaces of each resilient member are proximate an outer diameter of the rotary damper.

## Patentansprüche

1. Ein Rotationsdämpfer (10) zur Verwendung in einem Rotorflugzeug (120), wobei der Rotationsdämpfer Folgendes beinhaltet:
ein Gehäuse, wobei das Gehäuse einen Kanisterkörper (20) und ein oberes und ein unteres Kanisterbefestigungselement (30, 32) beinhaltet, wobei die Kanisterbefestigungselemente (30, 32) angepasst sind, um an Abschnitten eines Rotorsteuerarms angebracht zu werden;
ein erstes oberes und ein zweites unteres Maschinenbefestigungselement (40, 42), die angepasst sind, um einen Abschnitt des Rotationsdämpfers (10) fest an einen Abschnitt eines Rotorflugzeugs zu koppeln;
eine Rotoranordnung (70), die innerhalb des Gehäuses angeordnet ist, wobei die Rotoranordnung eine Vielzahl von Rotorflügeln (74) beinhaltet, die zwischen einer Vielzahl von Kammern (82) angeordnet sind;
ein erstes und ein zweites elastisches Element (50, 52), die angrenzend an äußere Abschnitte des Gehäuses angeordnet sind, wobei sich das erste und das zweite elastische Element von dem äußeren Abschnitt des Gehäuses in Richtung einer Mittelachse der Rotoranordnung (70) verjüngen;
wobei das erste elastische Element zwischen dem oberen Kanisterbefestigungselement (30) des Gehäuses und dem oberen Maschinenbefestigungselement (40) angeordnet ist,
und wobei das obere Maschinenbefestigungselement (40) und das obere Kanisterbefestigungselement (30) voneinander beabstandet sind, sodass ein Abschnitt des ersten elastischen Elements (50) von außerhalb des Rotationsdämpfers (10) sichtbar ist.

2. Rotationsdämpfer (10) gemäß Anspruch 1, wobei das mindestens eine elastische Element (50, 52) ein elastomeres elastisches Element ist und das elastische Element über 360° um den Umfang des Rotationsdämpfers herum sichtbar ist.

3. Rotationsdämpfer (10) gemäß Anspruch 1, wobei sich das mindestens eine elastische Element (50, 52) von dem äußeren Abschnitt des Gehäuses in Richtung einer Mittelachse der Rotoranordnung (70) verjüngt.

4. Rotationsdämpfer (10) gemäß Anspruch 1, wobei das mindestens eine elastische Element (50, 52) eine Scheibenform beinhaltet.

5. Rotationsdämpfer (10) gemäß Anspruch 1, wobei das obere Kanisterbefestigungselement (30) des Gehäuses und das obere Maschinenbefestigungselement (40) einen Abstand definieren, der gleich einer Dicke des elastischen Elements (50, 52) ist.

6. Rotationsdämpfer (10) gemäß Anspruch 1, wobei das untere Kanisterbefestigungselement (32) des Gehäuses und das untere Maschinenbefestigungselement (42) einen Abstand definieren, der gleich einer Dicke des elastischen Elements (50, 52) ist.

7. Rotationsdämpfer (10) gemäß Anspruch 1, wobei die Rotoranordnung (70) einen länglichen Körper beinhaltet.

8. Rotationsdämpfer (10) gemäß Anspruch 7, wobei mindestens ein Druckausgleichsdurchlass (98) innerhalb eines Abschnitts des länglichen Körpers angeordnet ist.

9. Rotationsdämpfer (10) gemäß Anspruch 7, wobei eine oder mehrere Rückschlagventilöffnungen (104) innerhalb eines Abschnitts des länglichen Körpers angeordnet sind.

10. Rotationsdämpfer (10) gemäß Anspruch 1, wobei die Rotoranordnung (70) einen Volumenausgleicher (94) beinhaltet, der angepasst ist, um einen positiven Druck innerhalb des Rotationsdämpfers (10) aufrechtzuerhalten.

11. Rotationsdämpfer (10) gemäß Anspruch 1, wobei eine primäre Flüssigkeitsöffnung (110) innerhalb eines Abschnitts eines ersten Rotors der Vielzahl von Rotorflügeln (74) angeordnet ist, wobei die primäre Flüssigkeitsöffnung (110) angepasst ist, um eine erste und eine zweite Kammer der Vielzahl von Kammern (82) zu verbinden.

12. Rotationsdämpfer (10) gemäß Anspruch 1, wobei eine Entlastungsventilöffnung (112) innerhalb eines Abschnitts eines ersten Rotorflügels der Vielzahl von Rotorflügeln (74) angeordnet ist, wobei sich die Entlastungsventilöffnung (112) als Reaktion auf eine Druckdifferenz zwischen einer ersten und einer zweiten Kammer der Vielzahl von Kammern (82) öffnet und schließt.

13. Rotationsdämpfer (10) gemäß Anspruch 1, wobei der Rotationsdämpfer ein erstes und ein zweites elastisches Element (50, 52) beinhaltet, die so positioniert sind, dass sich Außenflächen jedes elastischen Elements nahe einem äußeren Durchmesser des Rotationsdämpfers befinden.

## Revendications

1. Un amortisseur rotatif (10) pour une utilisation dans un aéronef à voilure rotative (120), l'amortisseur rotatif comprenant :
un boîtier, ledit boîtier comprenant un corps de cartouche (20), et des organes de fixation de cartouche supérieur et inférieur (30, 32), lesdits organes de fixation de cartouche (30, 32) étant conçus pour être attachés à des portions d'un bras de commande de voilure rotative ;
un premier organe de fixation de machine supérieur et un deuxième organe de fixation de machine inférieur (40, 42) conçus pour coupler de manière fixe une portion d'amortisseur rotatif (10) à une portion d'un aéronef à voilure rotative ;
un ensemble rotor (70) disposé à l'intérieur du boîtier, l'ensemble rotor comprenant une pluralité d'ailettes de rotor (74) disposées entre une pluralité de chambres (82) ;
des premier et deuxième organes élastiques (50, 52) disposés de manière adjacente à des portions extérieures du boîtier, lesdits premier et deuxième organes élastiques s'effilant depuis la portion extérieure du boîtier vers un axe central de l'ensemble rotor (70) ;
dans lequel le premier organe élastique est disposé entre ledit organe de fixation de cartouche supérieur (30) du boîtier et ledit organe de fixation de machine supérieur (40),
et lesdits organe de fixation de machine supérieur (40) et organe de fixation de cartouche supérieur (30) sont espacés de telle sorte qu'une portion du premier organe élastique (50) est visible de manière externe depuis l'extérieur de l'amortisseur rotatif (10).

2. L'amortisseur rotatif (10) de la revendication 1, dans lequel l'au moins un organe élastique (50, 52) est un organe élastique en élastomère et l'organe élastique est visible à 360° autour du périmètre de l'amortisseur rotatif.

3. L'amortisseur rotatif (10) de la revendication 1, dans lequel l'au moins un organe élastique (50, 52) s'effile depuis la portion extérieure du boîtier vers un axe central de l'ensemble rotor (70).

4. L'amortisseur rotatif (10) de la revendication 1, dans lequel l'au moins un organe élastique (50, 52) comprend une forme de disque.

5. L'amortisseur rotatif (10) de la revendication 1, dans lequel l'organe de fixation de cartouche supérieur (30) du boîtier et l'organe de fixation de machine supérieur (40) définissent une distance qui est égale à une épaisseur de l'organe élastique (50, 52).

6. L'amortisseur rotatif (10) de la revendication 1, dans lequel l'organe de fixation de cartouche inférieur (32) du boîtier et l'organe de fixation de machine inférieur (42) définissent une distance qui est égale à une épaisseur de l'organe élastique (50, 52).

7. L'amortisseur rotatif (10) de la revendication 1, dans lequel l'ensemble rotor (70) comprend un corps allongé.

8. L'amortisseur rotatif (10) de la revendication 7, dans lequel au moins une lumière d'égalisation de pression (98) est disposée au sein d'une portion du corps allongé.

9. L'amortisseur rotatif (10) de la revendication 7, dans lequel un ou plusieurs orifices de clapet anti-retour (104) sont disposés au sein d'une portion du corps allongé.

10. L'amortisseur rotatif (10) de la revendication 1, dans lequel l'ensemble rotor (70) comprend un compensateur de volume (94) conçu pour maintenir une pression positive au sein de l'amortisseur rotatif (10).

11. L'amortisseur rotatif (10) de la revendication 1, dans lequel un orifice primaire de liquide (110) est disposé à l'intérieur d'une portion d'un premier rotor de la pluralité d'ailettes de rotor (74), l'orifice primaire de liquide (110) étant conçu pour relier une première et une deuxième chambre de la pluralité de chambres (82).

12. L'amortisseur rotatif (10) de la revendication 1, dans lequel un orifice de clapet de décharge (112) est disposé à l'intérieur d'une portion d'une première ailette de la pluralité d'ailettes de rotor (74), l'orifice de clapet de décharge (112) s'ouvrant et se fermant en réponse à un différentiel de pression entre une première et une deuxième chambre de la pluralité de chambres (82).

13. L'amortisseur rotatif (10) de la revendication 1, l'amortisseur rotatif comprenant des premier et deuxième organes élastiques (50, 52) qui sont positionnés de telle sorte que des surfaces externes de chaque organe élastique sont à proximité d'un diamètre extérieur de l'amortisseur rotatif.
